# EUROPÄISCHE PATENTSCHRIFT

(11) **EP 2 307 756 B1**
(45) Veröffentlichungstag und Bekanntmachung des Hinweises auf die Patenterteilung: **07.03.2012**
(21) Anmeldenummer: 09777577.9
(22) Anmeldetag: 31.07.2009
(51) Int. Cl.: F16D 65/56

(54) **NACHSTELLVORRICHTUNG FÜR EINE SCHEIBENBREMSE**
ADJUSTING DEVICE FOR A DISK BRAKE
DISPOSITIF DE RATTRAPAGE DE JEU POUR UN FREIN À DISQUE

(30) Priorität: 01.08.2008 DE 102008036034
(43) Veröffentlichungstag der Anmeldung: 13.04.2011
(73) Patentinhaber: Knorr-Bremse Systeme für Nutzfahrzeuge GmbH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2009/005560
(87) Internationale Veröffentlichungsnummer: WO 2010/012483

(56) Entgegenhaltungen:
- DE-A1- 4 034 165
- DE-A1-102004 037 771
- US-A- 4 491 203

## Beschreibung

Die Erfindung betrifft eine Nachstellvorrichtung für eine Scheibenbremse, insbesondere pneumatisch betätigte Scheibenbremse, nach dem Oberbegriff des Anspruchs 1.

Nachstellvorrichtungen für Scheibenbremsen gibt es in unterschiedlichen Ausführungen. Aus der DE 10 2004 037 771 A1 ist eine Nachstellvorrichtung für eine Scheibenbremse bekannt. Sie ist für eine pneumatisch betätigte Scheibenbremse, insbesondere in Schiebesattelausfiihrung, geeignet. Weiterhin ist sie aber auch in pneumatisch betätigten Fest- oder Schwenksattelscheibenbremsen verwendbar.

Pneumatisch betätigte Scheibenbremsen gehören mittlerweile zur Standardausrüstung bei schweren Nutzfahrzeugen.

Derartige Scheibenbremsen benötigen zur Erzeugung der geforderten Zuspannkraft, eine mechanische Übersetzung, da die Kraft der pneumatisch beaufschlagten Bremszylinder wegen des Druckniveaus (derzeit ca. 10 bar) und der limitierten Baugröße der Bremszylinder beschränkt ist. Bei den derzeit bekannten pneumatisch betätigten Scheibenbremsen finden sich Übersetzungsverhältnisse zwischen 10:1 und 20:1. Die Kolbenhübe der Bremszylinder bewegen sich zwischen 50 und 75 mm, woraus sich Zuspannwege zum Andrücken der Bremsbeläge an die Bremsscheibe von etwa 4 mm ergeben.

Die Reibmaterialdicke der Bremsbeläge liegt im Bereich von 20 mm, da 2 Beläge eingebaut sind ergibt sich somit, ohne Berücksichtigung des Scheibenverschleißes, ein Verschleißweg von etwa 40 mm. Dieser Weg ist um ein Vielfaches größer als der o. e. Zuspannweg. Es besteht daher die Notwendigkeit die Bremse mittels einer Vorrichtung entsprechend dem Belagverschleiß nachzustellen. Stand der Technik ist eine automatisch arbeitende Verschleißnachstellung, womit erreicht wird, dass das so genannte Lüftspiel, damit ist der Spalt zwischen den Bremsbelägen und der Bremsscheibe im unbetätigten Zustand gemeint, unabhängig vom Verschleißzustand und Verschleißverhalten der Bremsbeläge, konstant gehalten wird.

Sehr häufig findet man in Nutzfahrzeugen Scheibenbremsen, welche über einen Nachsteller verfügen, der konzentrisch im Hohlraum eines Gewindestempels angeordnet ist und exzentrisch über ein Antriebselement (z. B.: Schaltfinger, Zahnrad) vom Bremshebel angetrieben wird. Bei einem Bremsvorgang führt der mit der Kolbenstange des Bremszylinders gekoppelte Bremshebel eine Drehbewegung aus. Bevor über den Koppelmechanismus der Nachstellung (z. B.: Schaltgabel und Schaltfinger oder Zahnräder) die Drehbewegung des Hebels in den Nachsteller eingeleitet wird, muss ein so genannter Leerweg überwunden werden. Dieser Weg ist für die Größe des Lüftspiels ausschlaggebend, da während dieser Bewegung die Nachstellung nicht aktiviert wird, und der Zuspannweg damit das Lüftspiel darstellt. Nach Überwinden dieses Leerwegs wird der Nachsteller in eine Drehbewegung versetzt, und durch die Koppelung mit dem Gewindestempel bzw. -rohr wird ein Nachstellvorgang eingeleitet.

Die DE 10 2004 037 771 A1 beschreibt eine solche Nachstellvorrichtung, die in Fig. 5 gezeigt ist. Sie besteht im Wesentlichen aus folgenden Funktionselementen:
- Welle 2
- Lagerscheibe 3
- Axiallager 4
- Bundbuchse 5
- Schaltgabel, bzw. Antriebsring 6
- Kugelrampenkupplung 7
- Kupplungsring 8
- Konuskupplung 9
- Zylinderfeder 10

Hinsichtlich der Beschreibung wird auf die DE 10 2004 037 771 A1 verwiesen.

Die Nachstellvorrichtung muss im Wesentlichen zwei Funktionen erfüllen:
1. die automatische Lüftspieleinstellung (Normalbetrieb); und
2. die manuelle Rückstellung der Nachstellmechanik beim Erneuern der Bremsbeläge.

Beim Einbau neuer Bremsbeläge müssen die Druckstücke, welche die Bremsbeläge an die Bremsscheiben drücken, zurückgestellt werden. Dies erfolgt durch das Zurückdrehen von Gewindestempeln (Gewinderohre), die während des Bremseneinsatzes durch die automatisch arbeitende Nachstellvorrichtung, dem Belagverschleiß entsprechend, herausgedreht wurden.

Bei diesem Zurückdrehen wird die Nachstellvorrichtung von Hand mit einem Schraubenschlüssel aus der so genannten Verschleißstellung in die Ausgangsstellung zurückgedreht. Hierbei muss die Nachstellvorrichtung gegen die Sperrrichtung eines Freilaufs verdreht werden. Da der Freilauf aber eine hundertprozentige Sperrwirkung aufweist, ist ein Zurückdrehen nicht ohne Weiteres möglich.

Die Aufgabe der vorliegenden Erfindung besteht daher darin, eine Nachstellvorrichtung mit verbesserter manueller Rückstellung bereitzustellen.

Die Aufgabe wird durch eine Nachstellvorrichtung mit den Merkmalen des Anspruchs 1 gelöst.

Die Aufgabe wird auch durch eine Scheibenbremse mit den Merkmalen des Anspruchs 9 gelöst.

Demgemäß ist eine Nachstellvorrichtung vorgesehen zur Nachstellung eines Verschleißes von Bremsbelägen einer pneumatisch betätigten Scheibenbremse mit Bremsscheibe und einer drehhebelbetätigten Zuspannvorrichtung, die vorzugsweise in eine Stellspindel der Scheibenbremse einsetzbar und an einem Bremssattel der Scheibenbremse mittels einer Lagerscheibe anbringbar ist, wobei axial auf einer Seite eines Antriebsrings ein Axiallager und axial auf der gegenüberliegenden Seite des Antriebsrings eine Kugelrampenkupplung mit Freilauffunktion ausgebildet ist; die Kugelrampenkupplung Kugeln, eine axial zwischen dem Axiallager und ihren Kugeln antriebsseitig angeordneten Antriebsbuchse und einen abtriebsseitigen Kupplungsring aufweist, eine Konuskupplung zwischen dem abtriebsseitigen Kupplungsring und einer Federhülse für eine Zylinderfeder angeordnet ist, dadurch gekennzeichnet, dass axial zwischen der Konuskupplung und der Federhülse eine drehmomentabhängige Kupplung mit Formgehemme angeordnet ist.

Dadurch ist es möglich, dass Bauraum- und Schnittstellenvorgaben berücksichtigt werden und größtenteils beibehalten werden, wodurch ein einfacher Austausch möglich ist. Die drehmomentabhängige Kupplung mit Formgehemme bietet außerdem beim manuellen Rückstellen ein typisches Geräusch als akustisches Merkmal, welches einem Betätiger einen bestimmten Zustand in einfacher Weise signalisiert, die ihm bereits bekannt ist, wodurch ein Einarbeitungsprozess vereinfacht ist.

Dadurch, dass die Konuskupplung bevorzugt eine Kugelkonuskupplung ist, welche den antriebsseitigen Kupplungsring und eine mit der drehmomentabhängigen Kupplung zusammenwirkende Kegelbuchse aufweist, wobei zwischen dem abtriebsseitigen Kupplungsring und der Kegelbuchse Konuskugeln angeordnet sind, ist es möglich, eine kompakte Bauform zu erzielen. Insbesondere, da die drehmomentabhängige Kupplung als Ratschenkupplung aus einem Abschnitt der Kegelbuchse der Konuskupplung und einer Kupplungsscheibe ausgebildet ist. Die Formgehemme sind aus jeweils korrespondierenden Verzahnungen gebildet. Die Kupplungsscheibe ist mit der Federhülse verbunden.

Diese Konstruktion bietet folgende Vorteile:
- Beim manuellen Zurückdrehen tritt das bekannte, typische Geräusch auf.
- Durch den Erhalt einer Sperrfunktion des Freilaufs in der Ruhestellung ergibt sich eine verbesserte Rüttelsicherheit gegen Aufdrehen der Nachstellmechanik.
- Kostengünstige Herstellung der Bauteile durch spanlose Umformtechnik.

In bevorzugter Ausführung sind die korrespondierenden Verzahnungen an dem Abschnitt der Konuskupplung und an der Kupplungsscheibe als gegenüberstehende Stirnverzahnungen ausgeführt. Derartige Bauteile sind kostengünstig durch spanloses Umformen herstellbar.

Das Zurückdrehen der Nachstellvorrichtung erfolgt entgegen der Sperrrichtung des Freilaufs. Die drehmomentabhängige Kupplung ermöglicht durch Abstimmung der Stirnverzahnungen, dass bei Überschreiten eines bestimmten Drehmomentes die Verzahnungen "überratschen". Die Vorspannung dieser Kupplung erfolgt über die in der Nachstellvorrichtung bereits vorhandene Zylinderfeder, die bevorzugt einstellbar ist. Die drehmomentabhängige Kupplung ist für ein höheres Übertragungsmoment als die Kugelrampenkupplung ausgebildet. Würde die Ratschkupplung vor der Kugelrampenkupplung, die auch als Lastschaltkupplung bezeichnet werden kann, ansprechen, käme es aufgrund der damit verbundenen hohen Lastspielzahl zu einem großen Verschleiß der Ratschkupplung.

Bei dieser Nachstellvorrichtung ist eine, in axialer Richtung wirkende, Richtungskupplung eingebaut. Die Richtungskupplung wird gebildet aus einem Kugelrampensystem und einer Reibungskupplung, insbesondere der Kugelkonuskupplung.

Beim Zurückdrehen von Hand wird die Drehbewegung über die Welle und die Federhülse zunächst in die drehmomentabhängige Ratschkupplung und in die Kugelkonuskupplung eingeleitet. Von da wird das Drehmoment über den Reibschluss in der Kugelkonuskupplung in die Kugelrampenkupplung geleitet. Da Kugelkonus- und Kugelrampenkupplung auf Selbsthemmung abgestimmt sind, kommt es zur Klemmwirkung.

Der Kupplungsring und der Antriebsring, der mit der Schaltgabel verbunden ist oder einen Abschnitt von ihr bildet, sind jeweils mit einer Innenprofilierung versehen, mit deren Hilfe es möglich ist, die beiden Komponenten in der Ruhestellung am weiteren Zurückdrehen zu hindern. Die Abstützung des Antriebsrings und des Kupplungsrings erfolgt an einer drehfest gelagerten Bundbuchse, welche eine zur Innenprofilierung des Kupplungsrings und des Antriebsrings passende Außenprofilierung aufweist. Wenn das eingeleitete Drehmoment das Ansprechmoment der Ratschkupplung übersteigt, kommt es zum "Durchratschen" der Ratschkupplung. Mit Anschlägen des Außenprofils an dem Innenprofil des Antriebsrings und des Kupplungsrings wird erreicht, dass einerseits die Klemmwirkung des Freilaufs erhalten bleibt und es andererseits zu keiner Verdrehung in der Kugelrampenkupplung kommt. Anderenfalls würde nicht sofort die Ratschkupplung ansprechen, sondern zunächst die Kugelrampenkupplung bis zum Erreichen einer Endposition der Kugeln auf den Rampenbahnen verdreht werden können (Drehmoment der Kugelrampenkupplung < Drehmoment der Ratschkupplung).

Außerdem ist vorgesehen, dass bei der Positionierung der Anschläge der Innenprofile des Antriebsrings und des Kupplungsrings der Anschlag des Außenprofils der Bundbuchse mit dem Innenprofil des Antriebsrings etwas früher zur Wirkung kommt als der Anschlag mit dem Innenprofil des Kupplungsrings. Dies erfolgt dadurch, dass zwischen dem Außenprofil und den Innenprofilen ein Winkelspiel zur Voreilung eines Anschlags zwischen Außenprofil und Antriebsringinnenprofil vor einem Anschlag zwischen Außenprofil und Kupplungsringinnenprofil ausgebildet ist.

Es ist weiterhin bevorzugt, dass das andere Ende der Bundbuchse, welches den feststehenden Abschnitt des Axiallagers bildet, an der an dem Bremssattel angebrachten Lagerscheibe drehfest befestigt ist.

Das Axiallager ist durch die eine Seite des Antriebsrings, Wälzkörper und einen Bund einer Bundbuchse, welche sich axial durch die Kugelrampenkupplung hindurch erstreckt, ausgebildet. Damit wird ebenfalls eine Teilevielfalt reduziert und ein kompakter Aufbau erzielt.

Eine Scheibenbremse, insbesondere pneumatisch betätigte Scheibenbremse, weist eine Nachstellvorrichtung nach der oben stehenden Beschreibung auf.

Die Erfindung wird nun anhand einer beispielhaften Ausführung mit Bezug auf die beigefügten Zeichnungen näher erläutert. Hierbei zeigen:
- Fig. 1: eine Längsschnittdarstellung eines Ausführungsbeispiels einer erfindungsgemäßen Nachstellvorrichtung;
- Fig. 2: eine perspektivische Schnittdarstellung des Ausführungsbeispiels nach Fig. 1;
- Fig. 3: eine vergrößerte perspektivische Darstellung einer Ratschkupplung nach Fig. 1 und 2;
- Fig. 4: eine schematische Querschnittsdarstellung des Ausführungsbeispiels nach Fig. 1 im Bereich X;
- Fig. 5: eine Teilschnittdarstellung einer Nachstellvorrichtung nach dem Stand der Technik; und
- Fig. 6: eine schematische Darstellung einer Scheibenbremse.

Elemente mit gleichen oder ähnlichen Funktionen sind in den Figuren mit gleichen Bezugszeichen versehen.

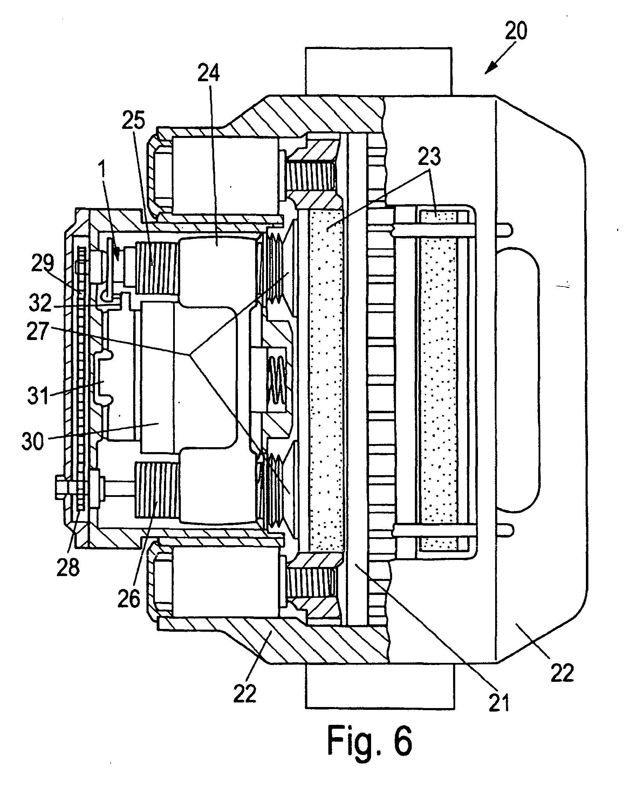

Zu Aufbau und Funktion einer pneumatischen Scheibenbremse nach Fig. 6 wird auf die entsprechende Beschreibung der DE 197 29 024 C 1 verwiesen. In der Fig. 6 sind hier die folgenden Komponenten angegeben: Scheibenbremse 20, Bremsscheibe 21, Bremssattel 22, Bremsbeläge 23, Traverse 24, Stellspindeln 25 und 26, Druckstücke 27, Kettenräder 28, Kette 29, Exzenter 30 und Drehhebel 31, welcher ein Antriebselement 32 aufweist, das mit einer Schaltgabel einer Nachstellvorrichtung 1 in Zusammenwirkung steht. Die Nachstellvorrichtung 1 ist hier in der Stellspindel 25 angeordnet. Eine derartige Nachstellvorrichtung 1 wird nun näher erläutert. Die Nachstellvorrichtung 1 wäre auch für eine elektromotorisch betätigte Scheibenbremse geeignet.

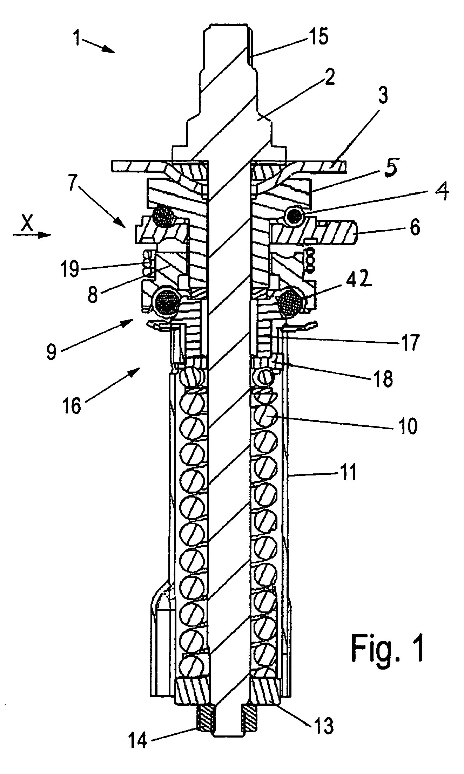

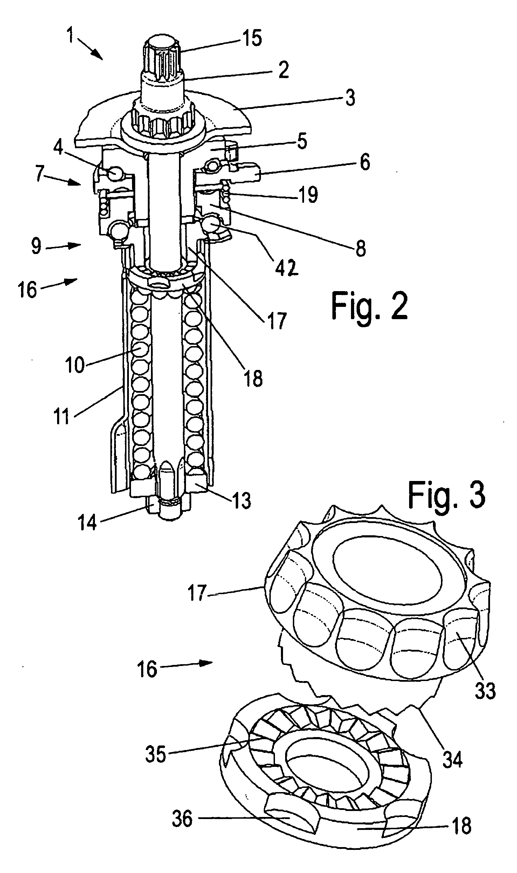

Dazu wird Bezug auf Fig. 1 und 2 genommen.

Fig. 1 ist eine Längsschnittdarstellung eines Ausführungsbeispiels einer erfindungsgemäßen Nachstellvorrichtung 1 und Fig. 2 zeigt eine perspektivische Schnittdarstellung des Ausführungsbeispiels nach Fig. 1.

Die Nachstellvorrichtung 1 weist Folgendes auf: eine Welle 2 mit einem Antriebszapfen 15 an ihrem oberen Ende; eine Lagerscheibe 3 zur Befestigung der Nachstellvorrichtung 1 im Bremssattel 22 (siehe Fig. 6); eine Bundbuchse 5, die verdrehsicher an der Lagerscheibe 3 angebracht ist und einen oberen Bund mit einer darunter angeordneten Lauffläche für Kugeln eines Axiallagers 4 aufweist; einen Antriebsring 6, der mit einer Schaltgabel verbunden ist, die mit dem Antriebselement 32 (siehe Fig. 6) des Drehhebels 31 gekoppelt ist; eine Kugelrampenkupplung 7, mit einem Kupplungsring 8, welcher mit einer Kegelbuchse 17 zusammenwirkt, die über eine drehmomentabhängige Kupplung 16 mit Formgehemme mit einer Federhülse 11 drehfest verbunden ist; eine Zylinderfeder 10, die in der Federhülse 11 angeordnet ist und sich auf einer Profilscheibe 13 abstützt; und ein Einstellelement 14, zum Beispiel eine Mutter, die auf dem unteren Ende der Welle 2 angeordnet ist und zum Spannen der Zylinderfeder 10 und zum axialen Zusammenhalt der Elemente der Nachstellvorrichtung 1 dient.

Bei dieser Nachstellvorrichtung 1 ist eine, in axialer Richtung wirkende, Richtungskupplung (Freilauf) eingebaut. Die Richtungskupplung wird aus einer Kugelrampenkupplung 7 und einer Reibungskupplung bzw. Konuskupplung 9, insbesondere einer Kugelkonuskupplung, gebildet.

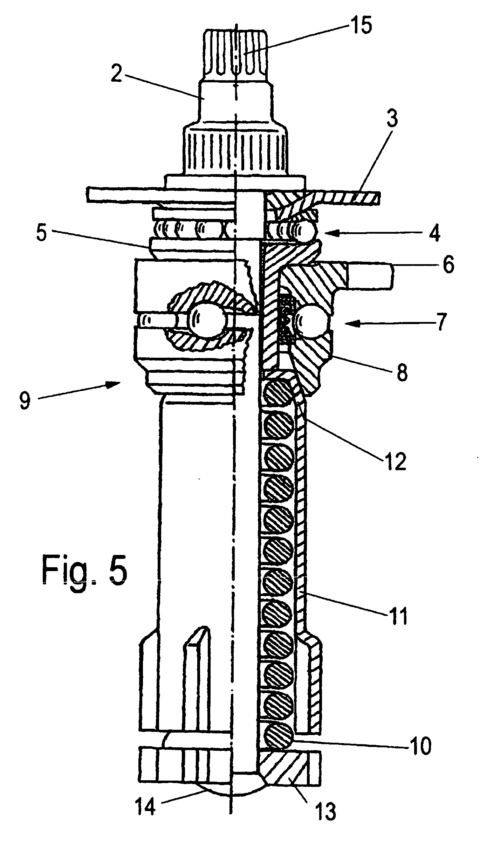

Die Kugelrampenkupplung 7 besteht aus dem Antriebsring 6, Rampenkugeln 42 bzw. Wälzkörpern und dem Kupplungsring 8, wobei der Kupplungsring 8 einen oberen Abschnitt zur Aufnahme der Kugeln und einen unteren Abschnitt aufweist, der einen Teil der Konuskupplung 9 bildet. Die allgemeine Funktion der Nachstellvorrichtung 1 wird in DE 10 2004 037 771 A1 mit Bezug auf Fig. 5 ausführlich beschrieben, worauf hier verwiesen wird.

Ein erster Unterschied zu der Nachstellvorrichtung nach Fig. 5 bildet eine drehmomentabhängige Kupplung 16 mit Formgehemme, welche als so genannte Ratschkupplung (im Weiteren als solche bezeichnet) ausgebildet ist, und unten noch ausführlicher erläutert wird. Diese Ratschkupplung 16 wirkt mit einem Abschnitt der Kegelbuchse 17 zusammen und ist mit einer Kupplungsscheibe 18 mit der Federhülse 11 drehfest verbunden.

Als ein weiterer Unterschied zu der Nachstellvorrichtung nach Fig. 5 ist bei der Nachstellvorrichtung 1 gemäß Figuren 1-3 das Axiallager 4 aus dem Bund der Bundbuchse 5, einer Seite des Antriebsrings 6 und Wälzkörpern gebildet. Das untere Ende der sich durch die Kugelrampenkupplung 7 hindurch erstreckenden Bundbuchse 5 bildet direkt oder über eine Druckscheibe einen axialen Anschlag für die Kegelbuchse 17. Die Kegelbuchse 17 wird über die Ratschkupplung 16 von der Zylinderfeder 10 nach oben gepresst, wobei die Komponenten Ratschkupplung 16 und Konuskupplung 9, Kugelrampenkupplung 7 und Axiallager 4 axial zusammengehalten und zusammengedrückt werden. Die Bundbuchse 5 mit ihrem Anschlag dient dazu, ein Minimalspiel der Lagerungen beizubehalten. Weiterhin ist eine Druckfeder 19 zwischen dem Kupplungsring 8 und dem Antriebsring 6 angeordnet. Die Kegelbuchse 17 kann sich weiterhin über ihr oberes Ende über die (hier gezeigte) Druckscheibe am unteren Ende der Bundbuchse 5 abstützen (wird unten noch näher erläurtert).

Fig. 3 illustriert eine vergrößerte perspektivische Darstellung der Ratschkupplung 16 nach Fig. 1 und 2. Die Ratschkupplung 16 besteht aus einem unteren Abschnitt der Kegelbuchse 17 mit einer ersten Stirnverzahnung 34 und einer Kupplungsscheibe 18 mit einer der ersten Stirnverzahnung 34 gegenüberliegenden korrespondierenden zweiten Stirnverzahnung 35. Weiterhin weist die Kupplungsscheibe 18 Ausnehmungen 36 zur Kopplung mit der Federhülse 11 auf, was nicht weiter erläutert wird.

Der in Fig. 3 oben liegende Abschnitt der Kegelbuchse 17 der Konuskupplung 9 ist mit Taschen 33 für eine Zusammenwirkung mit den Konuskugeln 42 in nicht näher beschriebener Weise versehen.

Beim so genannten Normalbetrieb wird durch den Brems- bzw. Drehhebel 31 (s. Fig. 6) in die Schaltgabel und den Antriebsring 6 der Nachstellvorrichtung eine Drehbewegung eingeleitet Über die Kugelrampenkupplung 7 (zwischen Schaltgabel 6 und Kupplungsring 8) wird die Drehbewegung in die Kugelkonuskupplung 9 geleitet. Aufgrund der Abstimmung von Kugelrampenkupplung 7 und Kugelkonuskupplung 9 kommt es zur Selbsthemmung und somit zur Weitergabe des Drehmoments in die nachgeschaltete Ratschkupplung 16. Von der Ratschkupplung 16 wird schließlich das Drehmoment in die Federhülse 11 und von da über eine Längsverzahnung in das Gewinderohr bzw. die Stellspindeln 25, 26 (siehe Fig. 6) geleitet.

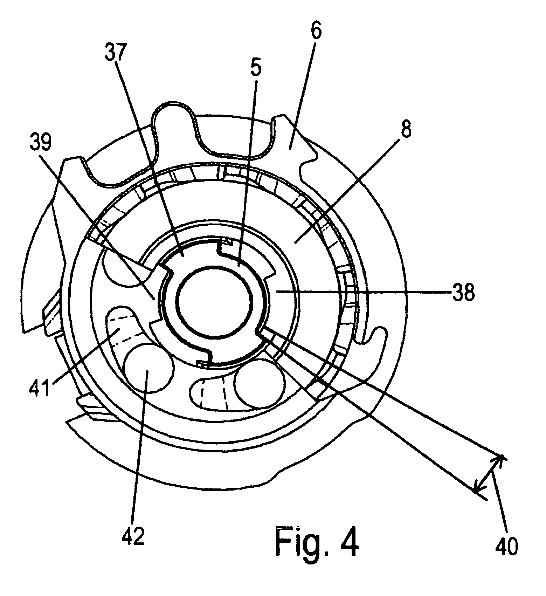

Im Normalbetrieb gibt es zwei unterschiedliche Betriebszustände.
Betriebszustand BZ1: das Lüftspiel (Spalt zwischen Bremsbelag 23 und Bremsscheibe 21) ist zu groß, eine automatische Nachstellung wird durchgeführt. Dabei ist das erforderliche Verstellmoment der nicht verspannten Stellspindel 25, 26 kleiner als das Lastschaltmoment der Kugelrampenkupplung 7. Die Stellspindel 25, 26 wird somit während der kraftfreien Betätigungsphase verdreht.
Betriebszustand BZ2: die Bremsbeläge 23 liegen an der Bremsscheibe 21 an und die Stellspindeln 25, 26 sind verspannt. Aufgrund von Verformung in der Bremse und den Bremsbelägen 23 führt der Bremshebel weiterhin bis zum Erreichen eines Kräftegleichgewichts eine Drehbewegung aus. Folglich wird auch in die Schaltgabel bzw. den Antriebsring 6 der Nachstellvorrichtung 1 weiterhin eine Drehbewegung eingeleitet. Da die Stellspindel 25, 26 in dieser Phase quasi drehfest verspannt ist, kommt es nun zum Ansprechen der so genannten Lastschaltkupplung bzw. Kugelrampenkupplung 7. Dabei findet zwischen Schaltgabel 6 und Kupplungsring 8 eine Relativbewegung statt. Durch das Rollen der Konuskugeln 42 auf den Kugelrampen 41 (siehe Fig. 4) der Schaltgabel 6 und des Kupplungsrings 8 wird der Kupplungsring 8 in axialer Richtung gegen die Kraft der Zylinderfeder 10 weggedrückt. Der Kupplungsring 8 überträgt die Kraft über die Kugelkonuskupplung 9 auf die Ratschkupplung 16. Da das Ansprechmoment der Ratschkupplung 16 größer ist als das Lastschaltmoment der Kugelrampenkupplung 7, kommt es zu keiner Bewegung und zu keiner Verschleißbeanspruchung in der Ratschkupplung 16.

Beim Lösen der Bremse kommt es zur Bewegungsumkehrung in der Nachstellvorrichtung 1. Dabei rollen zunächst die Konuskugeln 42 wieder die Kugelrampen 41 bis zur ursprünglichen Lage herunter. Beim Erreichen der ursprünglichen Kugelposition stützt sich die Zylinderfeder 10 nicht mehr über die Kugelrampenkupplung 7, sondern über einen Anschlag an der Bundbuchse 5 ab. Die Kugelkonuskupplung 9 und die Kugelrampenkupplung 7 sind damit praktisch kraftfrei. Falls bei der Betätigung der Bremse eine Nachstellung erfolgte, wird nun durch die zurückdrehende Schaltgabel 6 die Kugelkonuskupplung 9 in sich verdreht (Freilauffunktion). Die Stellspindel 25, 26 verbleibt somit in der vorher nachgestellten Position.

Die Welle 2 weist an ihrem oberen Ende in Fig. 1, 2 einen Antriebszapfen 15 auf, welcher für einen korrespondieren Schlüssel zum Beispiel eine Sechskantprofilierung aufweist. Mit einem darauf angesetzten Werkzeug, zum Beispiel ein gekröpfter Ringschlüssel, wird die Welle 2 nun in Richtung des gezeigten Pfeils entgegen dem Uhrzeigersinn verdreht. Bei diesem manuellen Zurückstellen von Hand wird das Drehmoment über die Welle 2 und die Federhülse 11 zunächst in die Ratschkupplung 16 und in die Kugelkonuskupplung 9 eingeleitet. Von da wird das Drehmoment über den Reibschluss der Kugelkonuskupplung 9 in die Kugelrampenkupplung 7 geleitet. Da Kugelkonuskupplung 9 und Kugelrampenkupplung 7 auf Selbsthemmung abgestimmt sind, kommt es zu einer Klemmwirkung.

Der Kupplungsring 8 und die Schaltgabel bzw. der Antriebsring 6 verfügen jeweils über eine Innenprofilierung mit deren Hilfe es möglich ist, die beiden Komponenten in der Ruhestellung am weiteren Zurückdrehen zu hindern. Dazu zeigt Fig. 4 eine schematische Querschnittsdarstellung des Ausführungsbeispiels nach Fig. 1 im Bereich X. Die Abstützung des Antriebsrings 6 und des Kupplungsrings 8 erfolgt an der drehfest gelagerten Bundbuchse 5, welche ein zu einem Kupplungsringinnenprofil 38 und einem Antriebsringinnenprofil 39 passendes Außenprofil 37 aufweist. Wenn das eingeleitete Drehmoment das Ansprechmoment der Ratschkupplung 16 übersteigt, kommt es zum Durchratschen der Ratschkupplung 16. Mit den Anschlägen zwischen dem Außenprofil 37 mit den Innenprofilen 38 und 39 von Antriebsring 6 und Kupplungsring 8 wird erreicht, dass zum einen die Klemmwirkung des Freilaufs erhalten bleibt und es zum anderen zu keiner Verdrehung in der Kugelrampenkupplung 7 kommt. Andernfalls würde nicht sofort die Ratschkupplung 16 ansprechen, sondern zunächst die Kugelrampenkupplung 7 bis zum Erreichen der Endposition der Konuskugeln 42 auf den Bahnen der Kugelrampen 41 verdreht werden. (Drehmoment der Kugelrampenkupplung 7 < Drehmoment der Ratschkupplung 16).

Bei der Positionierung der Anschläge von Antriebsring 6 und Kupplungsring 8 mit dem Außenprofil 37 der Bundbuchse 5 ist darauf zu achten, dass der Anschlag für den Antriebsring 6 (Antriebsringinnenprofil 39) etwas frühen zur Wirkung kommt als der Anschlag des Kupplungsringinnenprofils 38, da sonst die Klemmwirkung des Freilaufs in der Ruhestellung der Nachstelleinrichtung 1 nicht gewährleistet ist.

Dies wird mit einer so genannten Voreilung des Anschlags des Antriebsringinnenprofils 39 zum Anschlag des Kupplungsringinnenprofils 38 jeweils mit dem Außenprofil 37 der Bundbuchse 5 erreicht, indem ein Winkelspiel 40 vorgesehen ist.

Die Erfindung ist nicht auf die oben beschriebenen Ausführungsbeispiele beschränkt. Sie ist im Rahmen der beigefügten Ansprüche modifizierbar.

Als Formgehemme der Kupplung 16 sind auch Kombinationen von unterschiedlichen Stirnverzahnungen möglich.

Die Innen- und Außenprofile 37, 38, 39 können auch andere Formen aufweisen.

### Bezugszeichenliste

- 1: Nachstellvorrichtung
- 2: Welle
- 3: Lagerscheibe
- 4 5: Axiallager Bundbuchse
- 6: Antriebsring
- 7: Kugelrampenkupplung
- 8: Kupplungsring
- 9: Konuskupplung
- 10: Zylinderfeder
- 11: Federhülse
- 12: Hülsenkonus
- 13: Profilscheibe
- 14: Einstellelement
- 15: Antriebszapfen
- 16: Kupplung
- 17: Kegelbuchse
- 18: Kupplungsscheibe
- 19: Drehfeder
- 20: Scheibenbremse
- 21: Bremsscheibe
- 22: Bremssattel
- 23: Bremsbeläge
- 24: Traverse
- 25: Erste Stellspindel
- 26: Zweite Stellspindel
- 27: Druckstück
- 28: Kettenräder
- 29: Kette
- 30: Exzenter
- 31: Drehhebel
- 32: Antriebselement
- 33: Tasche
- 34: Erste Stirnverzahnung
- 35: Zweite Stirnverzahnung
- 36: Ausnehmung
- 37: Außenprofil
- 38: Kupplungsringinnenprofil
- 39: Antriebsringinnenprofil
- 40: Winkelspiel
- 41: Kugelrampe
- 42: Konuskugel

## Patentansprüche

1. Nachstellvorrichtung (1) zur Nachstellung eines Verschleißes von Bremsbelägen (23) einer pneumatisch betätigten Scheibenbremse (20) mit Bremsscheibe (21) und einer drehhebelbetätigten Zuspannvorrichtung, die vorzugsweise in eine Stellspindel (25) der Scheibenbremse (20) einsetzbar und an einem Bremssattel (22) der Scheibenbremse (20) mittels einer Lagerscheibe (3) anbringbar ist, wobei
(a) axial auf einer Seite eines Antriebsrings (6) ein Axiallager (4) und axial auf der gegenüberliegenden Seite des Antriebsrings (6) eine Kugelrampenkupplung (7) mit Freilauffunktion ausgebildet ist;
(b) die Kugelrampenkupplung (7) Kugeln (42), den axial zwischen dem Axiallager (4) und ihren Kugeln (42) antriebsseitig angeordneten Antriebsring (6) und einen abtriebsseitigen Kupplungsring (8) aufweist,
(c) eine Konuskupplung (9) zwischen dem abtriebsseitigen Kupplungsring (8) und einer Federhülse (11) für eine Zylinderfeder (10) angeordnet ist,
**dadurch gekennzeichnet, dass**
(d) axial zwischen der Konuskupplung (9) und der Federhülse (11) eine drehmomentabhängige Kupplung (16) mit Formgehemme angeordnet ist.

2. Nachstellvorrichtung (1) nach Anspruch 1, **dadurch gekennzeichnet, dass** die Konuskupplung (9) eine Kugelkonuskupplung ist, welche den antriebsseitigen Kupplungsring (8) und eine mit der drehmomentabhängigen Kupplung (16) zusammenwirkende Kegelbuchse (17) aufweist, wobei zwischen dem abtriebsseitigen Kupplungsring (8) und der Kegelbuchse (17) Konuskugeln (42) angeordnet sind.

3. Nachstellvorrichtung (1) nach Anspruch 2, **dadurch gekennzeichnet, dass** die drehmomentabhängige Kupplung (16) als Ratschenkupplung aus einem Abschnitt der Kegelbuchse (17) der Konuskupplung (9) und einer Kupplungsscheibe (18) ausgebildet ist, welche jeweils korrespondierende Verzahnungen aufweisen, wobei die Kupplungsscheibe (18) mit der Federhülse (11) verbunden ist.

4. Nachstellvorrichtung (1) nach Anspruch 3, **dadurch gekennzeichnet, dass** die korrespondierenden Verzahnungen eine an dem Abschnitt der Konuskupplung (9) angeordnete erste Stirnverzahnung (34) und eine an der Kupplungsscheibe (18) angeordnete zweite Stirnverzahnung (35) aufweist.

5. Nachstellvorrichtung (1) nach einem der vorhergehenden Ansprüche, **dadurch gekennzeichnet, dass** die drehmomentabhängige Kupplung (16) für ein höheres Übertragungsmoment als die Kugelrampenkupplung (7) ausgebildet ist.

6. Nachstellvorrichtung (1) nach einem der vorhergehenden Ansprüche, **dadurch gekennzeichnet, dass** der Antriebsring (6) ein Antriebsringinnenprofil (39) und der abtriebsseitige Kupplungsring (8) ein Kupplungsringinnenprofil (38) aufweisen, welche mit einem Außenprofil (37) einer sich axial durch die Kugelrampenkupplung (7) und den abtriebsseitigen Kupplungsring (8) hindurch erstreckenden Bundbuchse (5) zusammenwirken, wobei die Bundbuchse an einem dem Außenprofil (37) gegenüberliegenden Ende einen Bund aufweist, der einen feststehenden Abschnitt des Axiallagers (4) bildet.

7. Nachstellvorrichtung (1) nach Anspruch 6, **dadurch gekennzeichnet, dass** zwischen dem Außenprofil (37) und den Innenprofilen (38, 39) ein Winkelspiel (40) zur Voreilung eines Anschlags zwischen Außenprofil (37) und Antriebsringinnenprofil (39) vor einem Anschlag zwischen Außenprofil (37) und Kupplungsringinnenprofil (39) ausgebildet ist.

8. Nachstellvorrichtung (1) nach Anspruch 6 oder 7, **dadurch gekennzeichnet, dass** das andere Ende der Bundbuchse (5), welches den feststehenden Abschnitt des Axiallagers (4) bildet, an der an dem Bremssattel (22) anbringbaren Lagerscheibe (3) drehfest befestigt ist.

9. Scheibenbremse (20), insbesondere pneumatisch betätigte Scheibenbremse, mit einer Nachstellvorrichtung (1) nach einem der vorhergehenden Ansprüche.

## Claims

1. An adjustment device (1) for adjusting the wear of brake linings (23) of a pneumatically actuated disc brake (20) with brake disc (21) and a brake application device actuated by a rotary lever, which device can preferably be inserted into a setting spindle (25) of the disc brake (20) and can be attached to a brake calliper (22) of the disc brake (20) by means of a bearing disc (3), wherein
(a) axially on one side of a driving ring (6) an axial bearing (4), and axially on the opposing side of the driving ring (6) a ball ramp clutch (7) with freewheel function, is formed;
(b) the ball ramp clutch (7) has balls (42), the driving ring (6) which is arranged on the drive side axially between the axial bearing (4) and its balls (42) and a clutch plate (8) on the output side,
(c) a cone clutch (9) is arranged between the clutch plate (8) on the output side and a spring sleeve (11) for a cylindrical spring (10),
**characterised in that**
(d) a torque-dependent clutch (16) with positive restraint is arranged axially between the cone clutch (9) and the spring sleeve (11).

2. An adjustment device (1) according to Claim 1, **characterised in that** the cone clutch (9) is a ball cone clutch which has the clutch plate (8) on the drive side and a conical bushing (17) which cooperates with the torque-dependent clutch (16), with cone balls (42) being arranged between the clutch plate (8) on the output side and the conical bushing (17).

3. An adjustment device (1) according to Claim 2, **characterised in that** the torque-dependent clutch (16) is formed as a ratchet clutch from a section of the conical bushing (17) of the cone clutch (9) and a clutch disc (18), which each have corresponding toothing, the clutch disc (18) being connected to the spring sleeve (11).

4. An adjustment device (1) according to Claim 3, **characterised in that** the corresponding toothing has first spur toothing (34) arranged on the section of the cone clutch (9) and second spur toothing (35) arranged on the clutch disc (18).

5. An adjustment device (1) according to one of the preceding claims, **characterised in that** the torque-dependent clutch (16) is designed for a higher transmission torque than the ball ramp clutch (7).

6. An adjustment device (1) according to one of the preceding claims, **characterised in that** the driving ring (6) has an inner driving-ring profile (39) and the clutch plate (8) on the output side has an inner clutch-plate profile (38) which cooperate with an outer profile (37) of a collared bushing (5) extending axially through the ball ramp clutch (7) and the clutch plate (8) on the output side, the collared bushing having a collar on an end opposite the outer profile (37), which collar forms a fixed section of the axial bearing (4).

7. An adjustment device (1) according to Claim 6, **characterised in that** an angular clearance (40) for advancing a stop between the outer profile (37) and inner driving-ring profile (39) ahead of a stop between the outer profile (37) and the inner clutch-plate profile (39) [sic] is formed between the outer profile (37) and the inner profiles (38, 39).

8. An adjustment device (1) according to Claim 6 or 7, **characterised in that** the other end of the collared bushing (5) which forms the fixed section of the axial bearing (4) is fastened in rotation-resistant manner to the bearing disc (3) which can be attached to the brake calliper (22).

9. A disc brake (20), in particular pneumatically actuated disc brake, with an adjustment device (1) according to one of the preceding claims.

## Revendications

1. Dispositif de rattrapage (1) à rattraper une usure aux garnitures de frein (23 et 21) d'un frein à disque à commande pneumatique (20) et à un dispositif de serrage à commande par levier rotatif, qui est apte, de préférence, à être inséré dans une broche de réglage (25) dudit frein à disque (20) et fixé à un étrier de frein (22) dudit frein à disque (20) moyennant un disque de palier (3), dans lequel
(a) un palier lisse de butée (4) est formé en position axiale d'un côté d'une bague d'entraînement (6), pendant qu'un coupleur à rampe à bille (7) à fonction à roue libre est formé en position axiale du côté opposé de ladite bague d'entraînement (6);
(b) ledit coupleur à rampe à bille (7) comprend des billes (42), ladite bague d'entraînement (6) disposée axialement entre ledit palier lisse de butée (4) et ses billes (42) du côté d'entraînement, ainsi qu'une bague coupleur (8) du côté de sortie,
(c) et un coupleur en cône (9) est disposé entre ladite bague coupleur de sortie (8) et une douille de ressort (11) pour un ressort cylindrique (10),
**caractérisé en ce**
(d) **qu'**un coupleur (16) faisant fonction du couple à un moyen de blocage par forme est axialement disposé entre ledit coupleur en cône (9) et ladite douille de ressort (11).

2. Dispositif de rattrapage (1) selon la revendication 1, **caractérisé en ce que** ledit coupleur en cône (9) est un coupleur en cône à bille, qui comprend ladite bague coupleur (8) du côté d'entraînement et une douille conique (17) qui interagit avec ledit coupleur (16) répondant au couple, aux billes de cône (42) étant disposées entre ladite bague coupleur (8) du côté d'entraînement et ladite douille en cône (17).

3. Dispositif de rattrapage (1) selon la revendication 2, **caractérisé en ce que** ledit coupleur (16) répondant au couple est configuré sous forme d'un coupleur à cliquet à partir d'un segment de ladite douille conique (17) dudit coupleur en cône (9) et d'un disque d'embrayage (18), qui comprennent chacun des dentures correspondantes, audit disque d'embrayage (18) étant relié à ladite douille de ressort (11).

4. Dispositif de rattrapage (1) selon la revendication 3, **caractérisé en ce que** le lesdites dentures correspondantes présentent un premier crantage à dents de loup (34) disposée audit segment dudit coupleur en cône (9) et un deuxième crantage à dents de loup (35) disposée audit disque d'embrayage (18).

5. Dispositif de rattrapage (1) selon une quelconque des revendications précédentes, **caractérisé en ce que** ledit coupleur (16) répondant au couple est conçu pour un moment de transmission plus grand que ledit coupleur à rampe à billes (7).

6. Dispositif de rattrapage (1) selon une quelconque des revendications précédentes, **caractérisé en ce que** ladite bague d'entraînement (6) présente un profil intérieur de bague d'entraînement (39) et ladite bague coupleur du côté de sortie (8) présente un profil intérieur de bague coupleur (38), qui interagissent avec un profil extérieur (37) d'une douille à collet (5), qui s'étend axialement à travers dudit coupleur à rampe à billes (7) et ladite bague coupleur du côté de sortie (8), à ladite douille à collet présentant un collet à son extrémité opposée audit profil extérieur (37), qui constitue une partie fixe dudit palier lisse de butée (4).

7. Dispositif de rattrapage (1) selon la revendication 6, **caractérisé en ce qu'**il y a, entre ledit profil extérieur (37) et lesdits profils intérieurs (38, 39), un jeu angulaire (40) pour l'avance d'une butée entre ledit profil extérieur (37) et ledit profil intérieur de bague d'entraînement (39) avant une butée entre ledit profil extérieur (37) et ledit profil intérieur de bague coupleur (39).

8. Dispositif de rattrapage (1) selon la revendication 6 ou 7, **caractérisé en ce que** l'autre extrémité de ladite douille à collet (5), qui constitue la partie fixe dudit palier lisse de butée (4), est fixé audit disque de palier (3) pour rotation avec le dernier, lequel disque de palier st apte à être monté audit étrier de frein (22).

9. Frein à disque (20), en particulier à commande pneumatique, comprenant un dispositif de rattrapage (1) selon une quelconque des revendications précédentes.
